## Europäisches Patentamt

## European Patent Office

## Office européen des brevets

(11) Veröffentlichungsnummer: **0 138 212 B1**

# EUROPÄISCHE PATENTSCHRIFT

(45) Veröffentlichungstag der Patentschrift: **22.04.87**

(51) Int. Cl.⁴: **B 65 B 3/28**

(21) Anmeldenummer: **84112289.8**

(22) Anmeldetag: **12.10.84**

(54) **Anlage zum gleichzeitigen Abfüllen eines flüssigen, gasförmigen oder festen, fliessfähigen Mediums in mehrere Gebinde, wie Behälter, Fässer, Packungen od.dgl.**

(30) Priorität: **14.10.83 DE 3337352**

(43) Veröffentlichungstag der Anmeldung: **24.04.85 Patentblatt 85/17**

(45) Bekanntmachung des Hinweises auf die Patenterteilung: **22.04.87 Patentblatt 87/17**

(84) Benannte Vertragsstaaten: **BE CH DE FR GB IT LI NL SE**

(56) Entgegenhaltungen:
**EP - A - 0 105 197**
**DE - A - 2 728 759**
**DE - A - 3 022 413**
**US - A - 3 548 891**

(73) Patentinhaber: **Grosskreuz, Gerhard, Volksdorfer Weg 174, D-2000 Hamburg 65 (DE)**
Patentinhaber: **Kleinophorst geb. Schädel, Edith, Kronprinzenstrasse 9, D-4130 Moers 1 (DE)**

(72) Erfinder: **Grosskreuz, Gerhard, Volksdorfer Weg 174, D-2000 Hamburg 65 (DE)**
Erfinder: **Kleinophorst geb. Schädel, Edith, Kronprinzenstrasse 9, D-4130 Moers 1 (DE)**

(74) Vertreter: **Richter, Joachim, Dipl.-Ing. et al, Patentanwälte Richter u.Werdermann Neuer Wall 10, D-2000 Hamburg 36 (DE)**

ACTORUM AG

## Beschreibung

Die Erfindung betrifft eine Vorrichtung zum gleichzeitigen Abfüllen eines flüssigen oder festen, fliessfähigen Mediums in mehrere Gebinde, wie Behälter, Fässer, Packungen oder dgl., bestehend aus einem Rohrleitungssystem mit einer Förderpumpe für die Zuführung des abzufüllenden Mediums und mit über Zuführungsleitungen verbundenen Abfüllventilen oberhalb der zu füllenden Gebinde, wobei das Öffnen und Schliessen der Abfüllventile durch eine vom Gewicht des abzufüllenden Mediums abhängige Steuereinrichtung bewirkbar ist, wobei in jeder zu den Abfüllventilen führenden Zuführungsleitung eine Volumenkammer mit einem in deren Innenraum angeordneten, von dem zum jeweiligen Abfüllventil strömenden Medium in Drehung versetzten Laufrad angeordnet ist, wobei die Laufräder aller Volumenkammern über eine mechanische Welle starr miteinander verbunden sind, die mit einer mittels einer systemdruckabhängigen Steuereinrichtung steuerbaren Bremseinrichtung verbunden ist, wobei die Einrichtung zur Steuerung der Abfüllventile aus einem zweistufigen, pneumatischen Schaltzylinder besteht, der mit mindestens einem Abfüllventil direkt und mit den weiteren Abfüllventilen über eine Stelleinrichtung verbunden ist, wobei der Schaltzylinder von einem Steuerelement betätigbar ist, das in Verbindung mit einer einem der Abfüllventile zugeordneten Waage zur Bestimmung des Abfüllgewichts steht.

Durch die nachveröffentlichte, unter Artikel 54 (3) fallende EP-A-0 105 197 ist eine Vorrichtung zum gleichzeitigen Abfüllen eines flüssigen oder festen, fliessfähigen Mediums in mehrere Gebinde, wie Behälter, Fässer, Packungen oder dgl., bestehend aus einem Rohrleitungssystem mit einer Förderpumpe für die Zuführung des abzufüllenden Mediums und mit über Zuführungsleitungen verbundenen Abfüllventilen oberhalb der zu füllenden Gebinde bekannt, bei der in jeder zu den Abfüllventilen führenden Zuführungsleitung eine Volumenkammer mit einem in deren Innenraum angeordneten, von dem zum jeweiligen Abfüllventil strömenden Medium in Drehung versetzten Laufrad angeordnet ist, wobei die Laufräder aller Volumenkammern über eine mechanische Welle starr miteinander verbunden sind, die mit einer mittels einer systemdruckabhängigen Steuereinrichtung steuerbaren Bremseinrichtung verbunden ist, wobei zur Steuerung der Abfüllventile ein zweistufiger, pneumatischer Schaltzylinder vorgesehen ist, der mit mindestens einem Abfüllventil direkt und mit den weiteren Abfüllventilen über eine Stelleinrichtung verbunden ist, und wobei ein auf das Gewicht des abgefüllten Mediums über eine Waage, die einem der Abfüllventile zugeordnet ist, ansprechendes Steuerelement vorgesehen ist, das mit dem Schaltzylinder verbunden ist.

Mit einer derart ausgebildeten Abfüllvorrichtung ist ein eichfähiges Abfüllsystem geschaffen, mit dem mehrere Gebinde gleichzeitig befüllt werden können, wobei nur das Abfüllvolumen oder -gewicht eines Gebindes gemessen und überwacht zu werden braucht, so dass dadurch ein einfaches, wirtschaftliches Abfüllsystem erhalten werden soll, dessen Arbeitsleistung in einfachster Weise zu jeder Zeit ohne grossen technischen Aufwand erhöht werden kann. Ein Abbau von in den Zuführungsleitungen auftretenden Druckstössen zur Vermeidung von unrichtigen Messergebnissen ist bei dieser Vorrichtung jedoch nicht möglich.

Nach der US-A-3 548 891 ist eine Anlage zum gleichzeitigen Abfüllen mehrerer Gebinde, jedoch unter Verwendung von Dosier- und Fülleinrichtungen in einer der Anzahl der zu füllenden Behälter entsprechenden Anzahl bekannt, wobei jedem zu füllenden Behälter eine eigene Abfülleinrichtung zugeordnet ist. Die bei dieser Anlage verwendeten Abfüllstutzen ermöglichen das Füllen einzelner Behälter nach dem Abfüllvolumen, was dadurch möglich ist, dass jedem einzelnen Behälter eine Abfülleinrichtung zugeordnet ist. Jedoch wird bei dieser Abfülleinrichtung weder das Abfüllvolumen noch das Abfüllgewicht eines einzigen Behälters gemessen und überwacht, so dass die Füllung der Behälter nicht über das Abfüllvolumen oder das Abfüllgewicht eines einzigen Behälters gesteuert wird. Vielmehr wird das Abfüllvolumen oder das Abfüllgewicht für jeden einzelnen Behälter überwacht und zur Steuerung der Abfülleinrichtung herangezogen.

Die CH-A-147 328 beschreibt eine Abfüllvorrichtung, bei der ein gewichtsabhängiges Steuerorgan vorgesehen ist, welches in der Weise arbeitet, dass die weitere Zufuhr des abzufüllenden Mediums unterbrochen wird, wenn das jeweils vorgegebene Gewicht erreicht wird. Hierzu ist der zu befüllende Behälter auf einer Tragplatte angeordnet, die sich endseitig vermittels schneidartiger Lager auf den freien Enden zweier Hebel abstützt, deren einander zugekehrte freie Hebelenden einen Schalter betätigen, über den das Öffnen und Schliessen des Abfüllventils gesteuert wird, wobei diese Steuerung mittels eines Elektromagneten erfolgt, so dass bei Erreichen eines vorgegebenen Sollgewichtes die weitere Zufuhr an Abfüllmedium unterbrochen wird. Eine Vielzahl von Abfüllventilen nur über eine einzige gewichtsgesteuerte Vorrichtung zu steuern, ist bei dieser Abfüllvorrichtung nicht vorgesehen.

Durch die US-A-3 205 920 ist eine Abfüllvorrichtung bekannt, mit der an mehreren Abfüllventilen vorbeigeführte Behälter mit Flüssigkeiten befüllbar sind. Die Zuführung der zu befüllenden Behälter erfolgt über ein Transportband, dessen Vorlaufbewegung abgeschaltet wird, wenn die der Anzahl der Abfüllventile entsprechende Anzahl von Behältern unter den Ausgabeöffnungen der Abfüllventile zu liegen kommen. In diesem Augenblick werden über eine Kulissensteuerung alle Abfüllventile gleichzeitig auf die Öffnungen der zu befüllenden Behälter abgesetzt, wobei dann gleichzeitig über Pumpen den Abfüllventilen diejenige Menge an Flüssigkeit zugeführt wird, die in die Behälter abgefüllt werden soll. Um das gleichmässige Absetzen der Abfüllventile auf die Behälteröffnungen zu gewährleisten, sind alle Abfüllventile an einem Tragbalken befestigt, der in senkrechten Führungen verschieblich gehalten ist. Über den Kulissenantrieb ist dieser Tragbalken mit den Abfüllventilen auf und ab bewegbar. Die Verbindung der Abfüllventile mit den Pumpen erfolgt über flexible Schlauchleitungen. Auch bei dieser Abfüllvorrichtung werden alle Behälter gleichzeitig unter Verwendung von Abfüllventilen mit Flüssigkeit gefüllt, über die gleichzeitig die Dosierung vorgenommen wird.

Durch die DE-A-2 728 759 ist eine Maschinenanlage zum Vereinzeln und zum Füllen und Verschliessen von becherförmigen Behältern aus Papier, Pappe oder Kunststoff bekannt, die aus einer mit mehreren nebeneinander angeordneten Aufnahmetaschen versehenen, endlosen Fördereinrichtung, über der nacheinander Stapelstationen für Behälter, Deckplätter und Deckel mit Vorrichtungen zum Vereinzeln und Zuführen derselben vorgesehen sind, ferner aus einer Dosierstation mit Dosierorganen zum gleichzeitigen Befüllen mehrerer Behälter, eine Deckelstation und ggf. einer Deckelblattstation sowie einer Andrückstation mit Bodendruckwerk besteht. Dabei ist die Maschinenanlage in Längsrichtung von einer mit einem Antriebsmotor verbundenen Hauptantriebswelle durchsetzt, von der aus in den einzelnen Stationen entsprechenden Abständen Nebenantriebswellen senkrecht abgezweigt sind, die mit der Hauptantriebswelle in einem bodennahen Maschinengehäuse untergebracht sind, das seinerseits senkrecht zur Hauptantriebswelle Führungsschienen aufweist zum Einschieben eines kompletten Stationswerkzeuges, das mit Anschlussverbindungen für die jeder Station zugeordneten und benachbarten Versorgungsleitungen versehen ist. Diese Maschinenanlage, der becherförmige Behälter zum Füllen und Verschliessen zugeführt werden, ist hiernach so ausgebildet, dass komplette Werkzeuge untereinander ausgetauscht oder durch andere Werkzeuge ersetzt werden können, wozu weder ein grosser körperlicher Einsatz noch Fachkräfte noch ein besonderer Zeitaufwand erforderlich sein sollen. Des weiteren ist bei dieser Maschinenanlage jedem Stationswerkzeug ein zwischen zwei benachbarten Stationswerkzeugen fest installierter, mit Versorgungsleitungen versehener Leitungskasten zugeordnet. Die auf diese Weise in die Maschinenanlage ein- und ausbaubaren Werkzeuge, die komplett mit Antrieb und Versorgungsleitung in kürzester Zeit auch von ungelernten Kräften ausser Betrieb gesetzt und wieder zum Einsatz gebracht werden können, sollen Vorteile mit sich bringen, und zwar insofern, als ein kleiner Betrieb mit einer Grundmaschine und zwei Werkzeugen die Produktion von Verkaufsverpackungen beginnen und sie durch nachträglichen Zukauf weiterer Werkzeuge immer mehr ausgestalten kann. Ausserdem soll ein bestimmtes Werkzeug, z.B. für die Deckplattoder Siegelstation, bei mehreren Grundmaschinen immer dort, wo es gebraucht wird, eingesetzt werden. Wesentlich ist jedoch bei dieser Maschinenanlage, dass die Steuerung der Menge oder des Gewichts des abzufüllenden Mediums nicht über das gewichtsmässige Erfassen eines Behälters während dessen Füllvorganges erfolgt, sondern gleichzeitig werden über entsprechend vorgesehene Dosiereinrichtungen mehrere Behälter gefüllt.

Die DE-A-3 022 413 betrifft eine Vorrichtung zum Abfüllen von Flüssigkeiten mit Hilfe einer Waage, wobei diese Vorrichtung als Füllventil für Wägefüller ausgebildet ist, das zwei Öffnungsstufen aufweist, wobei diese zwei Öffnungsstufen aus zwei übereinander angeordneten, nacheinander betätigbaren Ventilen bestehen, wobei ein Ventil aus dem Ventilgehäuse und einem in dem Ventilgehäuse auf und ab bewegbaren Ventilkörper und das andere Ventil aus einem innerhalb des Ventilgehäuses befestigten Körper und einem mit einer Stange in Verbindung stehenden Ventilkörper gebildet ist. Mit einem derart ausgebildeten Füllventil soll sich der Vorteil einer sicheren und einfachen Arbeitsweise bei kurzen Füllzeiten und hoher Füllgenauigkeit ergeben. Das Ventilgehäuse dieses Füllventils weist im unteren Bereich eine Grobfülldüse auf, in der ein Feinfüllrohr angeordnet ist. Die Ventilsitze für die Grobfülldüse und das Feinfüllrohr sind einander derart zugeordnet, dass beim Einleiten eines Füllvorganges vermittels eines Zugmagneten die beiden Ventilsitze der Grobfülldüse und des Feinfüllrohres geöffnet und ein Stossmagnet eingeschaltet werden, so dass der gesamte Austrittsquerschnitt, d.h. die Öffnungen der Grobfülldüse und des Feinfüllrohres, freigegeben wird. Nach Erreichen einer voreingestellten Zwischenmenge, die über die Zeit oder in einer anderen geeigneten Weise vorwählbar ist, wird der Zugmagnet abgeschaltet und dadurch der Ventilsitz der Grobfülldüse geschlossen, so dass kein weiterer Zulauf des abzufüllenden Mediums in den Behälter über die Grobfülldüse möglich ist. Der Ventilsitz für das Feinfüllrohr bleibt so lange geöffnet, bis das Sollgewicht erreicht wird. Ist dieses erreicht, so wird der Stossmagnet abgeschaltet und der Ventilsitz für das Feinfüllrohr verschlossen, so dass die Feinfüllung ebenfalls unterbrochen wird. Die Steuerung der gesamten Wägefülleinrichtung erfolgt automatisch und unter Verwendung einer Waage und einer Steuereinheit, über die das Füllventil gesteuert wird. Bei dieser Abfüllvorrichtung erfolgt beim Füllen eines jeden Behälters ein gewichtsmässiges Erfassen des in den Behälter über das Abfüllventil zugeführte Füllgut, wobei über dieses gewichtsmässige Erfassen vermittels der Steuereinheit die Grobfüllung und die Feinfüllung gesteuert werden. Ein gleichzeitiges Befüllen mehrerer Behälter, wobei das Füllgut nur eines einzigen Behälters gewichtsmässig erfasst und zu Steuerungszwecken der Abfüllventile aller anderen Abfüllstationen verwendet wird, ist bei dieser bekannten Vorrichtung nicht vorgesehen.

Durch die US-A-3 580 304 ist eine Anlage zum gleichzeitigen Abfüllen von Wasser in mehrere Gläser über eine Wasserverteilungs-Sammelleitung mit einer der Anzahl der zu füllenden Gläser entsprechenden Anzahl von Flüssigkeitsaustrittsdüsen bekannt, wobei jeweils eine Austrittsdüse einem zu befüllenden Gefäss zugeordnet ist. Die Zuführung des Wassers zur Wasserverteilungs-Sammelleitung erfolgt mittels eines einzigen Ventils, das in der Hauptzuführungsleitung angeordnet ist und das über eine Einrichtung gesteuert wird. Diese Steuereinrichtung besteht aus einer als einarmiger Hebel ausgebildeten Plattform, die einendseitig um einen Schwenkpunkt verschwenkbar angeordnet ist und eine Tragplatte aufnimmt, auf der die zu füllenden Gläser angeordnet sind. Das freie Ende dieser Tragplatte ist mittels einer Feder beaufschlagt, und zwar derart, dass bei auf dieser Tragplatte aufgesetzten Gläsern vor und während des Füllvorganges das Zuflussventil eine geöffnete Stellung einnimmt und erst dann geschlossen wird, wenn alle Behälter auf der Tragplatte gefüllt sind und die Tragplatte aufgrund des dadurch entstehenden höheren Gewichtes gegen den Druck der die Tragplatte beaufschlagenden Feder bewegt wird, mit der Folge, dass über eine Steuerstange das Wasserzuflussventil geschlossen wird. Bei dieser Abfüllvorrichtung wird jedoch nicht das Abfüllvolumen oder -gewicht eines einzigen Gebindes gemessen und überwacht und zu Steuerungszwecken für die Durchführung des Füllvorganges für die anderen Gebinde verwendet. Hier wird vielmehr das Abfüllgewicht aller Gebinde zur Steuerung des Zuflussventils herangezogen. Jedem der zu befüllenden Behälter ist kein eigenes steuerbares Abfüllventil zugeordnet, sondern über ein einziges Ventil wird der Wasserzufluss zur gesamten Wasserverteilungs-Sammelleitung gesteuert. Die Verwendung eines einzigen Steuerventils erbringt den Nachteil, dass bei einem Schliessen des Ventils nicht gleichzeitig alle Zulaufdüsen zu den zu füllenden Behältern der Wasserverteilungs-Sammelleitung geschlossen werden und es somit zu einem Nachfliessen der sich noch in der Wasserverteilungs-Sammelleitung befindlichen Flüssigkeit kommt, was letztlich zu unterschiedlichen Füllmengen und Füllgewichten führen kann. Ausserdem ist kein gleichmässiger Druck der zugeführten Flüssigkeit in der Wasserverteilungs-Sammelleitung gegeben, da eine Druckabnahme eintritt, je länger und je grösser diese Wasserverteilungs-Sammelleitung ist und je mehr Austrittsdüsen für die zu befüllenden Behälter vorgesehen sind. Ausserdem ist die Abfüllvorrichtung in keiner Weise erweiterbar; auch eine Verringerung der Anzahl der zu befüllenden Behälter ist nicht möglich. Eine Erweiterung ist schon aus dem Grunde nicht möglich, weil der Gefässträger für die zu füllenden Behälter vorgegebene Abmessungen aufweist und so ausgelegt ist, dass eine vorgegebene Anzahl von zu befüllenden Behältnissen aufgenommen werden kann. Eine einwandfreie Funktion der Abfüllvorrichtung ist dann nicht gewährleistet, wenn gegenüber der auf dem Gefässträger vorgesehenen Anzahl von Behältern eine kleinere Anzahl auf dem Gefässträger angeordnet wird. Eine Steuerung des Wasserzulaufventils ist in diesem Fall nicht möglich, da das Gewicht der gefüllten Behälter nicht ausreicht, um den Gefässträger gegen den Druck der Feder zu verschwenken, um das Zulaufventil zu verschliessen.

Alle bekannten Abfüllvorrichtungen sind nicht so ausgelegt, dass bei Bedienung mehrerer und auch unterschiedlicher Verbraucher Druckstösse vermeidbar sind, so dass bei einer plötzlichen Unterbrechung der Zufuhr des abzufüllenden Mediums ein Druckabbau in den Zuführungsleitungen zu den Füllstationen oder Verbrauchern eintritt, so dass in den Fällen, in denen Wägungen durchgeführt werden, falsche Messergebnisse erhalten werden können, aufgrund der dann die von den Steuereinrichtungen an die Abfüllventile weitergegebenen Steuerbefehle zu Endgewichten für das abzufüllende Medium führen, die von den Soll-Werten wesentlich abweichen.

Die Erfindung löst die Aufgage, ein eichfähiges Abfüllsystem zu schaffen, mit dem mehrere Gebinde gleichzeitig gefüllt werden können, wobei nur das Abfüllvolumen oder -gewicht eines Gebindes gemessen und überwacht zu werden braucht, so dass dadurch ein einfaches, wirtschaftliches Abfüllsystem erhalten wird, dessen Arbeitsleistung in einfachster Weise zu jeder Zeit ohne grossen technischen Aufwand erhöht werden kann, und bei dem durch Zuschalten oder Abschalten einer mit dem Abfüllsystem verbundenen und zu einem weiteren Verbraucher, wie Tankwagen oder dgl., führenden Abzapfleitung in den Zuführungsleitungen auftretende Druckstösse zur Vermeidung von unrichtigen Messergebnissen abgebaut werden.

Zur Lösung dieser Aufgabe wird eine gattungsgemässe Abfüllvorrichtung vorgeschlagen, die erfindungsgemäss in der Weise ausgebildet ist, dass die Hauptzuführungsleitung des Rohrleitungssystems mit einer weiteren, zu einem Verbraucher führenden Abzapfleitung versehen ist, und dass in der zu dem Abfüllventil mit zugeordneter Waage führenden Zuführungsleitung vor dem Abfüllventil eine Förderpumpe angeordnet ist.

Mit einer derartigen Ausgestaltung ist eine eichfähige Abfüllvorrichtung geschaffen, mit der mehrere Gebinde gleichzeitig gefüllt werden können, wobei nur das Abfüllvolumen oder -gewicht eines Gebindes gemessen und überwacht wird. Dabei ist gewährleistet, dass die übrigen, nicht durch eine Waage überwachten Gebinde ebenfalls im Rahmen der zulässigen Toleranzen mit dem gewünschten Gewicht oder Volumen des Mediums gefüllt werden. Dies wird dadurch erreicht, dass die Laufräder der Volumenkammern über eine Welle zentral durch das zu den Abfüllventilen strömende Medium angetrieben werden, wobei über eine mittels einer systemdruckabhängigen Steuereinrichtung steuerbare Bremseinrichtung de Umlaufgeschwindigkeit der die Laufräder der Volumenkammern miteinander verbindenden Welle gesteuert wird, so dass in allen Volumenkammern gleiche Druckverhältnisse herrschen, so dass das abzufüllende Medium den Abfüllventilen mit gleichem Druck zugeführt wird. Durch die Verwendung einer einzigen Waage als Leitstand werden die Abfüllventile gesteuert. Alle Abfüllventile werden gleichzeitig geöffnet oder geschlossen. Das Schliessen der Abfüllventile erfolgt gleichzeitig, wenn das auf der Waage vorgegebene Soll-Gewicht erreicht wird.

Mit einer derart ausgebildeten Abfüllvorrichtung werden folgende Vorteile erreicht:

— Nur ein Gebinde wird gewogen oder volumetrisch überwacht.

— Die Fülltoleranz aller weiteren Abfüllventile hängt lediglich von der Genauigkeit der mechanisch gekoppelten Volumenkammern ab. Da die Genauigkeit der mechanisch gekoppelten Volumenkammern sehr gross ist, werden keine bzw. kaum das Endgewicht beeinflussende Fülltoleranzen erhalten.

— Eine vorhandene Abfüllvorrichtung kann erweitert werden.

— Druckwellen und Druckschwankungen in dem Rohrleitungssystem der Vorrichtung haben keinen Einfluss auf die Fülltoleranz.

Durch die Koppelung der Volumenkammern mittels einer starren Welle und durch die synchrone Betätigung der Abfüllventile durch eine Stellmechanik ist die Bedingung der Eichfähigkeit erfüllt.

Dadurch, dass in denjenigen Zuführungsleitungen, in denen die einer Waage zugeordneten Abfüllventile angeordnet sind, eine weitere Förderpumpe vorgesehen ist, werden in dem Rohrleitungssystem auftretende Druckstösse abgebaut. Es hat sich nämlich gezeigt, dass in den Fällen, in denen die Hauptzuführungsleitung mit einer weiteren Abzapfleitung verbunden ist, über die ein weiterer Abnehmer oder Verbraucher, wie Tankwagen oder dgl., während des Abfüllens des Mediums in die Gebinde, versorgt wird, Druckstösse in den zu den Volumenkammern führenden Zuführungsleitungen auftreten, die sich insofern nachteilig auf die Messergebnisse der Waage auswirken, als bei einer plötzlichen Unterbrechung der Zufuhr des Mediums zu dem weiteren Abnehmer zu einem Druckaufbau in den Zuführungsleitungen mit der Folge führt, dass plötzlich und insbesondere auch stossweise Medium dem auf der Waage stehenden Gebinde zugeführt wird. Durch diese plötzliche, unterschiedliche Mediumzufuhr zeigt die Waage falsche Messergebnisse an bzw. gibt falsche Messergebnisse an die Steuereinrichtung weiter, so dass die Gebinde dann letztlich nicht die vorgegebenen Endgewichte für das abgefüllte Medium enthalten. Durch die Vorschaltung einer Förderpumpe vor dem Abfüllventil, das der Waage zugeordnet ist, wird ein gleichmässiger Zulauf an Medium zum Abfüllventil gewährleistet, so dass die vorgegebenen Endgewichte genauestens eingehalten werden können. Erhöhte Austrittsgeschwindigkeiten werden vermieden, denn die vorgeschaltete Förderpumpe sorgt für das Einhalten gleichmässiger Austrittsgeschwindigkeiten, auch wenn in der Zuführungsleitung von der Förderpumpe Druckschwankungen auftreten sollten.

Nach einer weiteren vorteilhaften Ausgestaltung der Erfindung ist in jeder der zu den Abfüllventilen führenden Zuführungsleitungen eine Förderpumpe angeordnet. Dadurch, dass alle Förderpumpen gleichlaufend sind, ist bei allen Abfüllventilen die gleiche Anströmgeschwindigkeit gegeben.

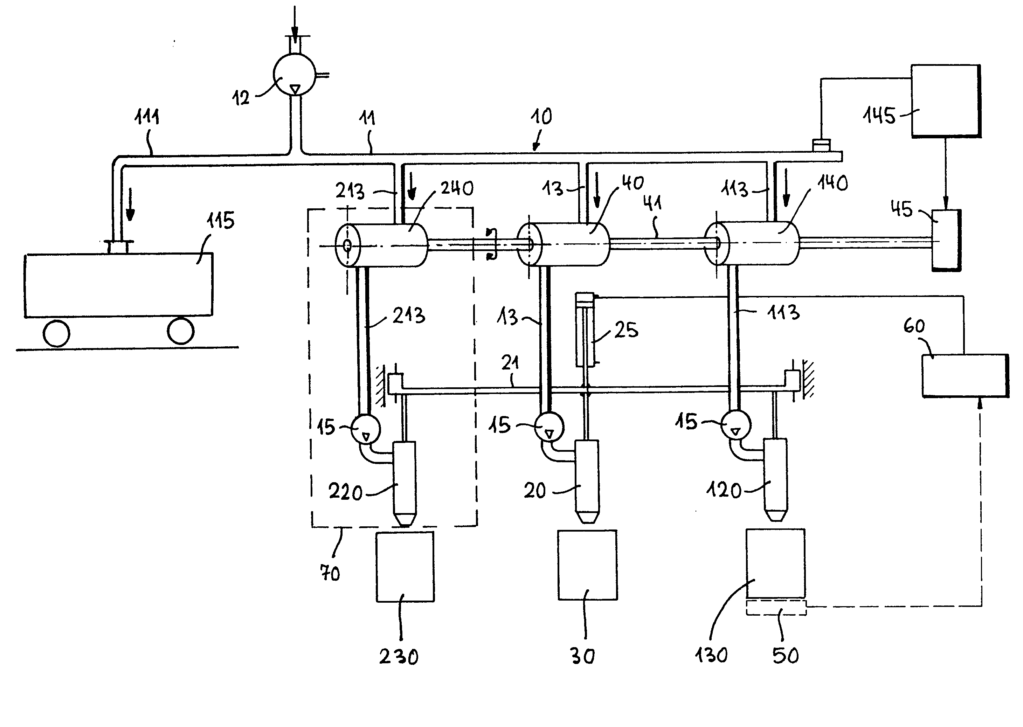

Im folgenden wird der Gegenstand der Erfindung in der Zeichnung erläutert, die in einer schematischen Darstellung eine Abfüllvorrichtung zum gleichzeitigen Abfüllen eines Mediums in mehrere Gebinde mit Volumenkammern, deren Laufräder über eine gemeinsame, von einer Waage gesteuerte Steuerwelle miteinander verbunden sind, und in einen Tankwagen, zeigt.

Die Abfüllvorrichtung besteht aus einem Rohrleitungssystem 10, welches eine Hauptzuführungsleitung 11 für das abzufüllende Medium, in der eine Förderpumpe 12 angeordnet ist, und eine Anzahl von weiteren, von der Hauptzuführungsleitung 11 abzweigenden Zuführungsleitungen 13, 113, 213 umfasst, die zu einer entsprechenden Anzahl von Abfüllventilen 20, 120, 220 führen. Die Anzahl der Abfüllventile kann beliebig gewählt sein; sie richtet sich nach der jeweiligen Grösse der Abfüllvorrichtung und danach, welche Anzahl von Gebinden gleichzeitig befüllt werden soll. Bei dem in der Zeichnung dargestellten Ausführungsbeispiel sind drei Abfüllventile vorgesehen.

Die Hauptzuführungsleitung 11 ist mit einer Abzapfleitung 111 versehen, die zu einem weiteren Verbraucher oder Abnehmer führt, z.B. zu einem bei 115 angedeuteten Tankwagen.

Die Betätigung der in an sich bekannter Weise ausgebildeten Abfüllventile 20, 120, 220, d.h. das Öffnen, das Einstellen und Schliessen, erfolgt über eine Stelleinrichtung 21, die mit den Abfüllventilen 20, 120, 220 verbunden ist und die von einem zweistufigen, pneumatischen Schaltzylinder 25 gesteuert wird.

Jedem Abfüllventil 20, 120, 220 ist ein zu füllendes Gebinde 30, 130, 230 zugeordnet. Bei diesen Gebinden handelt es sich um Behälter, Fässer, Packungen oder dgl., wobei keine Begrenzungen in den Abmessungen der zu füllenden Gebinde gegeben sind. Anstelle der Gebinde können auch die Ladefläche von Lastkraftwagen, Transportschiffen oder dgl. in gleicher Weise gleichzeitig befüllt werden.

Jedem Abfüllventil 20, 120, 220 ist ene Volumenkammer 40, 140, 240 vorgeschaltet, die in den von der Hauptzuführungsleitung 11 abzweigenden Zuführungsleitungen 13, 113, 213, die zu den Abfüllventilen 20, 120, 220 führen, angeordnet ist. Jede Volumenkammer 40, 140, 240 weist in ihrem Innenraum ein in der Zeichnung nicht dargestelltes Laufrad auf, das in der Volumenkammer drehbar gelagert ist und das von dem zum Abfüllventil strömenden Medium in Umlauf versetzt wird. Die Laufräder aller Volumenkammern 40, 140, 240 sind über eine mechanische Welle 41 fest miteinander verbunden. Diese mechanische Welle 41 steht mit einer Bremseinrichtung 45 in Verbindung, die über eine systemdruckabhängige Steuereinrichtung 145 gesteuert wird, wodurch wiederum die Umlaufgeschwindigkeit der Laufräder in den Volumenkammern 40, 140, 240 vorgegeben wird, so dass in allen Volumenkammern gleiche Druckverhältnisse herrschen.

Die Lagerwellen der Laufräder der Volumenkammern 40, 140, 240 können über Steckverbindungen zu der Welle 41 miteinander verbunden sein, so dass die Möglichkeit besteht, eine bereits vorhandene und eine bestimmte Anzahl von Volumenkammern mit Abfüllventilen aufweisende Abfüllanlage zu erweitern. Hierfür ist jedes Abfüllventil mit der ihm zugeordneten Volumenkammer als Baueinheit 70 ausgebildet, so dass lediglich ein Anschluss der Volumenkammer an die Hauptzuführungsleitung 11 des vorhandenen Rohrleitungssystems 10 und ein Anschluss an die Stelleinrichtung 21 erforderlich ist.

Einem der Abfüllventile 20, 120, 220 der Abfüllvorrichtung ist eine in an sich bekannter Weise ausgebildete Waage 50 zugeordnet. Bei der in der Zeichnung dargestellten Ausführungsform ist die Waage 50 unterhalb des Abfüllventils 120 angeordnet. Die Waage 50 steht mit einem Steuerelement 60 in Verbindung, über das wiederum der Schaltzylinder 25 steuerbar st. In der Zuführungsleitung 113 zu dem Abfüllventil 120, dem die Waage 50 zugeordnet ist, ist eine Förderpumpe 15 angeordnet, die das ankommende Medium mit gleichmässiger Fördergeschwindigkeit dem Abfüllventil 120 zuführt.

Die Abfüllvorrichtung arbeitet wie folgt:

Das abzufüllende Medium wird mittels der Förderpumpe 15 durch das Rohrleitungssystem 10 zu den Abfüllventilen 20, 120, 220 gefördert. Aus den Abfüllventilen strömt das Medium in die darunter positionierten Gebinde. Vor jedem Abfüllventil 20, 120, 220 durchströmt das Medium die den Abfüllventilen vorgeschalten Volumenkammern 40, 140, 240, deren Laufräder durch das strömende Medium in Umlauf versetzt werden.

Dadurch, dass die Laufräder der den Abfüllventilen 20, 120, 220 zugeordneten Volumenkammern 40, 140, 240 durch die Welle 41 miteinander verbunden sind, ist gewährleistet, dass jedem Abfüllventil im Rahmen der Genauigkeit der starr über die Welle 41 gekoppelten Laufräder der Volumenkammern 40, 140, 240 dieselbe Menge des Mediums zugeführt wird. Die Abfüllventile 20, 120, 220 werden mittels des zweistufigen pneumatischen Schaltzylinders 25 auf Grob- und Feinvolumen eingestellt und geöffnet und geschlossen. Die genaue Synchronisation beim Öffnen, Einstellen und Schliessen der Abfüllventile 20, 120, 220 wird durch die Stelleinrichtung 21 zwischen dem Schaltzylinder 25 und den Abfüllventilen erzeugt.

Die Ansteuerung des pneumatischen Schaltzylinders 25 erfolgt über die Steuereinrichtung 60, die auf das Gewicht des abzufüllenden Mediums anspricht.

Gegebenenfalls kann, falls erforderlich, zur Steuerung des Systemdrucks auf der mechanischen Welle 41, die die Laufräder der Volumenkammern 40, 140, 240 verbindet, eine Bremseinrichtung 45 vorgesehen sein. Das Bremsmoment wird über die Steuereinrichtung 145 entsprechend dem optimalen Systemdruck geregelt.

Die Abfüllanlage ist geeignet für das Abfüllen von flüssigen, gasförmigen oder festen Stoffen, wobei letztere Fliesseigenschaften aufweisen müssen.

Nach einer weiteren Ausführungsform der Erfindung erfolgt die Steuerung der Umlaufgeschwindigkeit der Welle 41 und der mit dieser verbundenen Laufräder der Volumenkammern 40, 140, 240 nicht über die Bremseinrichtung 45, sondern vermittels eines in der Zeichnung nicht dargestellten, regelbaren Elektromotors. Dieser Regelmotor kann auch polumschaltbar ausgebildet sein.

Über die Waage 50 erfolgt über den vom Steuerelement 60 angesteuerten Schaltzylinder 25 das Umschalten von Grobzulauf auf Feinzulauf des abzufüllenden Mediums. Dieses Umschalten vom Grobzulauf auf den Feinzulauf wird durch ein vorgegebenes Gewicht erreicht, so dass bei Erreichen dieses Gewichtes oder Volumens über den Feinzulauf noch soviel Medium zugeführt wird, bis das eigentliche Soll-Gewicht erreicht wird.

Vorteilhaft ist es, wenn in jeder der zu den Abfüllventilen 20, 120, 220 führenden Zuführungsleitungen 13, 113, 213 eine Förderpumpe 15 angeordnet ist, wobei alle Förderpumpen 15 gleichlaufend sind, so dass bei allen Abfüllventilen die gleiche Anströmgeschwindigkeit gegeben ist, wobei die Förderpumpe oder die Förderpumpen 15 eine Fördergeschwindigkeit haben sollten, die geringfügig über der Fördergeschwindigkeit der Förderpumpe 15 liegt, wenn ein Verbraucher angeschlossen und bedient wird.

## Patentansprüche

1. Vorrichtung zum gleichzeitigen Abfüllen eines flüssigen oder festen, fliessfähigen Mediums in mehrere Gebinde, wie Behälter, Fässer, Packungen oder dgl., bestehend aus einem Rohrleitungssystem (10) mit einer Förderpumpe (12) für die Zuführung des abzufüllenden Mediums und mit über Zuführungsleitungen (13; 113; 213) verbundenen Abfüllventilen (20; 120; 220) oberhalb der zu füllenden Gebinde (30; 130; 230), wobei das Öffnen und Schliessen der Abfüllventile (20; 120; 220) durch eine vom Gewicht des abzufüllenden Mediums abhängige Steuereinrichtung bewirkbar ist, wobei in jeder der zu den Abfüllventilen (20; 120; 220) führenden Zuführungsleitung (13; 113; 213) eine Volumenkammer (40; 140; 240) mit einem in deren Innenraum angeordneten, von dem zum jeweiligen Abfüllventil (20; 120; 220) strömenden Medium in Drehung versetzten Laufrad angeordnet ist, wobei die Laufräder aller Volumenkammern (40, 140, 240) über eine mechanische Welle (41) starr miteinander verbunden sind, die mit einer mittels einer systemdruckabhängigen Steuereinrichtung (145) steuerbaren Bremseinrichtung (45) verbunden ist, wobei die Einrichtung zur Steuerung der Abfüllventile (20, 120, 220) aus einem zweistufigen, pneumatischen Schaltzylinder (25) besteht, der mit mindestens einem Abfüllventil (20) direkt und mit den weiteren Abfüllventilen (120, 220) über eine Stelleinrichtung (21) verbunden ist, wobei der Schaltzylinder (25) von einem Steuerelement (60) betätigbar ist, das in Verbindung mit einer einem der Abfüllventile (20; 120; 220) zugeordneten Waage (50) zur Bestimmung des Abfüllgewichts steht, wobei die Hauptzuführungsleitung (11) des Rohrleitungssystems (10) mit einer weiteren, zu einen Verbraucher (115) führenden Abzapfleitung (111) versehen ist und in der zu dem Abfüllventil (120) mit zugeordneter Waage (50) führenden Zuführungsleitung (113) vor dem Abfüllventil (120) eine Förderpumpe (15) angeordnet ist.

2. Vorrichtung nach Anspruch 1, wobei in jeder der zu den Abfüllventilen (20, 120, 220) führenden Zuführungsleitungen (13, 113, 213) eine Förderpumpe (15) angeordnet ist, wobei alle Förderpumpen (15) gleichlaufend sind.

## Claims

1. Device for simultaneously filling a plurality of containers such as receptacles, cacks, packages or the like a liquid, gaseous or solid substances comprising a tubing system (10) with a feed pump (12) to be fed with the substance to be filled and with filling valves (20; 120, 220) connected by means of feeding tubes (13; 113; 213) above the containers to be filled (30; 130; 230), whereby the opening and the closing of the filling valves (20; 120; 220) can be actuated through a control device depending on the weight of the substance to be filled, whereby a chamber (40; 140; 240) with a running wheel positioned in its interior being rotated by the substance streaming to the respective filling valve (20; 120; 220) is arranged in each of the feeding tubes (13; 113; 213) leading to the filling valves (20; 120; 220), whereby the running wheels of all chambers (40, 140, 240) are rigidly joined with each other by means of a mechanical shaft (41) which is linked with a brake system (45) controlled by a control system (145) dependent on system pressure, whereby the device for the control of the filling valves (20; 120; 220) consists of a two-stage pneumatic switch cylinder (25), which is linked with at least one filling valve (20) directly and with further filling valves (120, 220) by means of a setting device (21), whereby the switch cylinder (25) can be actuated from a control element (60) which is in contact with a balance (50) allocated to one of the filling valves (20; 120; 220) to determine the filling weight, whereby the main feeding tube (11) of the tubing system (10) is provided with a further drawing-off tube (111) leading to a consumer (115) and in the feeding tube (113) leading to the filling valve (120) with allocated balance (50) a feed pump (15) is arranged before the filling valve (120).

2. Device according to claim 1 whereby in each of the feeding tubes (13, 113, 213) leading to the filling valves (20, 120, 220) a feed pump (15) is arranged, whereby all feed pumps (15) are running in the same direction.

**Revendications**

1. Dispositif pour le remplissage simultané d'une matière liquide, gazeuse ou solide dans une pluralité de conteneurs, tels que des récipients, fûts, emballages etc., composé d'un système de tuyauteries (10) avec une pompe d'alimentation (12) pour l'alimentation de la matière à remplir et avec des vannes de remplissage (20, 120, 220) reliées par des conduites d'alimentation (13, 113, 213) et situées au-dessus des emballages à remplir (30, 130, 230), l'ouverture et la fermeture des vannes de remplissage (20, 120, 220) pouvant être réalisée par un organe de commande dépendant du poids de la matière à remplir, une chambre de volume (40, 140, 240) avec une roue mobile placée à l'intérieur de celle-ci, dont la rotation est provoquée par la matière qui s'écoule vers la vanne de remplissage respective (20, 120, 220), étant placée dans chacune des conduites d'alimentation (13, 113, 213) menant aux vannes de remplissage (20, 120, 220), les roues mobiles de toutes les chambres de volume (40, 140, 240) étant reliées les unes aux autres de manière rigide par un arbre mécanique (41) relié à un dispositif de freinage (45) qui peut être commandé par un organe de commande (145) actionné par la pression du système, le dispositif de commande des vannes de remplissage (20, 120, 220) comportant un cylindre de commutation (25) pneumatique, à deux étages, qui est relié à au moins une vanne de remplissage (20) de manière directe et aux autres vannes de remplissage (120, 220) par un organe de réglage (21), le cylindre de commutation (25) pouvant être actionné par un élément de commande (60) qui est en relation avec une balance (50) correspondant à l'une des vannes de remplissage (20, 120, 220) pour déterminer le poids de remplissage, la conduite principale d'alimentation (11) du système de tuyauteries (10) étant équipée d'une autre conduite de soutirage (111) menant au consommateur (115), et une pompe d'alimentation (15) étant placée dans la conduite d'alimentation (113) menant à la vanne de remplissage (120) avec la balance correspondante (50) devant la vanne de remlissage (120).

2. Dispositif selon la revendication 1, une pompe d'alimentation (15) étant placée dans chacune des conduites d'alimentation (13, 113, 213) menant aux vannes de remplissage (20, 120, 220), toutes les pompes d'alimentation (15) fonctionnant de manière synchrone.

0 138 212